Europäisches Patentamt

European Patent Office

Office européen des brevets

(19)

(11) EP 0 940 432 A1

(12) EUROPÄISCHE PATENTANMELDUNG

(43) Veröffentlichungstag:
08.09.1999 Patentblatt 1999/36

(51) Int. Cl.⁶: **C08K 9/00**, C08L 83/04

(21) Anmeldenummer: 98124208.4

(22) Anmeldetag: 17.12.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 26.02.1998 DE 19808116

(71) Anmelder: Wacker-Chemie GmbH
81737 München (DE)

(72) Erfinder:
• Achenbach, Frank, Dr.
84359 Simbach / Inn (DE)

• Barthel, Herbert, Dr.
84547 Emmerting (DE)
• Finger, Christian, Dr.
84489 Burghausen (DE)

(74) Vertreter:
Fritz, Helmut, Dr. et al
Wacker-Chemie GmbH,
Zentralabteilung Patente,
Marken und Lizenzen,
Hanns-Seidel-Platz 4
81737 München (DE)

(54) **Siliconelastomere**

(57)     Peroxidisch-vernetzbare Siliconkautschukmassen, die einen Füllstoff enthalten, der kovalent-gebundene Si-H-haltige Gruppen aufweist.

**Beschreibung**

Die Erfindung betrifft peroxidisch vernetzbare Siliconkautschukmassen, ihre Herstellung und Gegenstände, die sie aufweisen.

Peroxidisch-vernetzte Siliconelastomere (meist unter der Bezeichnung HTV-(*high temperature vulcanizing*) Siliconkautschuk zusammengefaßt) weisen im Unterschied von z.B. additionsvernetzten Siliconelastomeren eine gewisse, unerwünschte Gelbfärbung auf; diese Gelbfärbung (*yellowing*) ist eine sehr wohl bekannte Tatsache; zahlreiche Versuche zur Verhinderung bzw. Verminderung der Gelbfärbung wurden unternommen. Bekannt ist, daß die Gelbfärbung von zahlreichen Einflußfaktoren abhängt, was erklärt, daß die Gelbfärbung allgemein in sehr unterschiedlichem Ausmaß in Erscheinung tritt. Beispielsweise sind peroxidisch-vernetzte Siliconelastomere unmittelbar nach Herstellung, d.h. im ungetemperten Zustand, lediglich schwach gelblich; im Anschluß an die für viele Anwendungen unverzichtbare thermische Nachbehandlung (Temperung; z.B. 4h/200°C) tritt die Gelbfärbung besonders ausgeprägt in Erscheinung. Des weiteren ist bekannt, daß die Art des verwendeten Peroxids bei ansonsten unveränderter Zusammensetzung erheblichen Einfluß auf die Ausprägung der Gelbfärbung hat. So sind Siliconelastomere, die mit z.B. Dicumylperoxid vernetzt wurden deutlich intensiver gelb als solche, die mit z.B. Bis(2,4-dichlorbenzoyl)-peroxid vernetzt wurden.

JP 04161458 (SHINETSU CHEM IND CO LTD) beschreibt die Verwendung spezieller Peroxide, namentlich Dialkylperoxide, in Verbindung mit einer anorganischen oder organischen Alkalimetallbase, wie Natriumhydroxid, -silanolat, -methylat, wobei letztere mit der füllstoffhaltigen Organopolysiloxanmasse vor der Peroxidzugabe bei erhöhter Temperatur umgesetzt wird. Nachteilig an diesem Verfahren ist u.a., daß es in der Regel aufgrund der unterschiedlichen Herstellungsverfahren der Siliconelastomere (Extrusion oder Preßform) auf bestimmte Peroxide beschränkt ist, mit anderen Worten, es besteht keine freie Wahl des Peroxids. Zudem führen die zugesetzten basischen Alkalimetallverbindungen zu einer Reihe unerwünschter Nebenreaktionen, bedingen prozeßtechnische Nachteile, können die Walzenklebrigkeit des Compounds erhöhen, Schwierigkeiten bei der Entformung des vernetzten Siliconelastomers verursachen und die Finaleigenschaften der Siliconelastomere, wie Druckverformungsrest und Thermostabilität, nachteilig beeinflussen.

Als weitere Ursachen und Einflußfaktoren werden stickstoffhaltige Rückstände im eingesetzten HTV-Polymer bzw. Füllstoff diskutiert, die z.B. aus dem in der Polymerherstellung eingesetzten PNCl$_2$-Katalysator, aus Silazanrückständen oder deren Folgeprodukten herrühren können. Tatsächlich läßt sich in vielen Fällen durch intensives Ausheizen der Rezepturbestandteile, also sorgfältiges Beseitigen derartiger Rückstände, die Gelbfärbung bedingt vermindern, was jedoch mit zusätzlichen, ökonomisch nicht tragbaren Verfahrensschritten verbunden ist.

Wünschenswert sind Additive, die der unvernetzten HTV-Siliconkautschukmasse zugesetzt werden können und die Gelbfärbung verhindern. Dem Stand der Technik gemäß sind hierfür folgende Additive bekannt:

DE 3726010 (WACKER-CHEMIE GMBH) beschreibt peroxidisch-vernetzbare Siliconkautschukmassen, welchen zwecks Verminderung der Gelbfärbung Organopolysilane zugesetzt werden. Obgleich auf diese Weise eine deutliche Verminderung der Gelbfärbung erzielt werden kann, müssen doch erhebliche Nachteile in Kauf genommen werden; diese betreffen vor allem deutlich höhere Werte im Druckverformungsrest sowie eine Erhöhung der Oberflächenklebrigkeit und Haftung, was mit Verarbeitungsnachteilen (Walzenklebrigkeit, schlechtere Entformbarkeit) und unerwünschten Finaleigenschaften (Oberflächenklebrigkeit) verbunden sein kann.

DE 3243194 (DEGUSSA AG) lehrt die Verwendung von Polmethylhydrogensiloxan (H-Siloxan), welches als gelbfärbungsverminderndes Additiv der peroxidisch-vernetzbaren Siliconkautschukmasse in Mengen von 0,1 bis 2 Gew.-% (bezogen auf die Gesamtmasse) zugesetzt wird. Tatsächlich läßt sich auf diese Weise in zahlreichen Fällen die Gelbfärbung deutlich vermindern bzw. sogar völlig ausschließen. Dennoch muß festgestellt werden, daß häufig deutlich höhere Mengen an H-Siloxan eingesetzt werden müssen, um eine ausreichende Verminderung der Gelbfärbung zu erzielen. Insbesondere in diesen, jedoch grundsätzlich auch in den übrigen Fällen bedingt die Verwendung der relativ niedrigmolekularen Polymethylhydrogensiloxane verarbeitungstechnische Nachteile, welche zum einen in einer erhöhten Walzenklebrigkeit des Compounds, zum anderen in einer erschwerten Entformbarkeit der vernetzten Siliconelastomere (auch als Formenhaftung bezeichnet) resultiert. Dies ist insofern verständlich, als H-Siloxan bekanntermaßen als Haftvermittler Verwendung findet.

Bekanntermaßen kann die Tendenz zur Gelbfärbung durch mehrstündiges intensives Kneten der Siliconkautschukmasse bei hohen Temperaturen (>150°C) vermindert werden. Besonders nachteilig tritt die Gelbfärbung folglich dann in Erscheinung, wenn das Herstellungsverfahren der Siliconkautschukmasse einen solchen (zeit- und energieintensiven) Ausheizschritt nicht beinhaltet. Insbesondere in diesen Fällen machen sich höhere H-Siloxanmengen zum Zwecke der Verminderung der Gelbfärbung erforderlich und die damit verbundenen Nachteile treten besonders gravierend in Erscheinung.

Aufgabe der Erfindung war es, die Nachteile des Standes der Technik zu beseitigen und insbesondere peroxidisch-vernetzbare Siliconkautschukmassen zur Verfügung zu stellen, die eine verminderte Gelbfärbung aufweisen.

Gegenstand der Erfindung sind peroxidisch-vernetzbare Siliconkautschukmassen, die einen Füllstoff enthalten, der kovalentgebundene Si-H-haltige Gruppen aufweist.

Die erfindungsgemäßen peroxidisch-vernetzbaren Siliconkautschukmassen enthalten vorzugsweise

(A) Organosiloxane aus Einheiten der allgemeinen Formel

$$R^1_a SiO_{(4-a)/2},\tag{I}$$

worin der Rest $R^1$ gleich oder verschieden sein kann und einen substituierten oder nichtsubstituierten Kohlenwasserstoffrest mit 1 bis 20 Kohlenstoffatomen bedeutet oder gleich H oder OH ist und a 0, 1, 2 oder 3 ist,

(B) Füllstoff, der kovalent-gebundene SiH-haltige Gruppen aufweist

(C) gegebenenfalls sonstige, jedoch SiH-freie, verstärkende und/oder nichtverstärkende Füllstoffe,

(D) die Vernetzung der Siliconkautschukmasse fördernde Peroxide, wobei organische Peroxide bevorzugt sind,

(E) sonstige Zusätze, wie Hitzestabilisatoren, Weichmacher, Trennmittel, Haftvermittler, Hydrophobiermittel, Flammschutzmittel, UV-Absorber, Siliconharze etc.

**Zu (A):** Bevorzugte Beispiele für substituierte oder nicht substituierte Kohlenwasserstoffreste $R^1$ sind vorzugsweise Alkylreste, wie Methyl-, Ethyl-, Propyl-, Isopropyl-, tert.-Butyl-, n-Octyl-, 2-Ethylhexyl- und Octadecylrest; Alkenylreste, wie Vinyl-, Allyl-, Hexenyl- und Undecenylrest; Cycloalkylreste, wie Cyclopentyl- oder Cyclohexylrest; Cycloalkenylreste, wie Cyclopentenyl- oder Cyclohexenylrest; Arylreste, wie Phenyl-, Tolyl-, Xylyl- oder Naphthylrest; Aralkylreste, wie Benzyl- oder Phenylethylrest, sowie halogenierte und/oder mit organischen Gruppen funktionalisierte Derivate der voranstehenden Reste, wie 3,3,3-Trifluorpropyl- oder Cyanomethylrest.

Bevorzugte Reste $R^1$ sind Methyl-, Vinyl-, Phenyl- und 3,3,3-Trifluorpropylrest.

Vorzugsweise sind an mindestens 70 Mol-% der in dem Organopolysiloxan aus Einheiten der Formel (I) enthaltenden Si-Atome Alkylreste, insbesondere Methylreste, gebunden. Enthalten die Organopolysiloxane (A) neben Si-gebundenen Methyl- und/oder 3,3,3,-Trifluorpropylresten noch Si-gebundene Vinyl- und/oder Phenylreste, so handelt es sich bei letzteren um Gehalte von 0,001 bis 30 Mol-%.

Vorzugsweise bestehen die Organosiloxane (A) überwiegend aus Diorganosiloxaneinheiten. Die Endgruppen der Organopolysiloxane (A) können vorzugsweise Trialkylsiloxygruppen, insbesondere der Trimethylsiloxyrest oder der Dimethylvinylsiloxyrest, sein; es können aber auch ein oder mehrere der in den kettenständigen und/oder endständigen Siloxaneinheiten enthaltenen Alkylreste durch Wasserstoff, Hydroxygruppen oder Alkoxygruppen, wie Methoxy- und Ethoxyreste, ersetzt sein.

Bei den Organopolysiloxanen (A) kann es sich um niedrigviskose Flüssigkeiten oder hochviskose, pastöse Substanzen handeln. Vorzugsweise weisen die Organopolysiloxane (A) eine Viskosität zwischen 100 mPa.s und 200.000 Pa.s, gemessen mit einem Brookfield-Viskosimeter bei einer Temperatur von 25°C, auf; besonders bevorzugt sind Organopolysiloxane mit einer Viskosität zwischen 100.000 mPa.s und 50.000 Pa.s. Es können auch Mischungen verschiedener voranstehend charakterisierter Organopolysiloxane (A) verwendet werden. Organopolysiloxane (A) werden vorzugsweise in Mengen von 20 bis 99 Gew.-% und besonders bevorzugt in Mengen von 55 bis 80 Gew.-% bezogen auf die Gesamtmassen eingesetzt.

**Zu (B):** Der die erfindungsgemäße Siliconkautschukmasse auszeichnende Bestandteil (B) ist ein Füllstoff, der auf seiner Oberfläche kovalent-gebundene SiH-haltige Gruppen aufweist.

Als Füllstoffe für eine kovalente Anbindung SiH-haltiger Organosiliciumverbindungen kommen an sich beliebige Füllstoffe in Frage. Der vorzugsweise zu erzielende Effekt, nämlich die Verhinderung der Gelbfärbung, ist nur sinnvoll, wenn der ausgewählte Füllstoff nicht selbst eine Verfärbung des Siliconelastomers verursacht. Jedoch sind auch z.B. Ruße und Farbpigmente möglich, die kovalent-gebundene SiH-Gruppen enthalten. Bevorzugt sind daher nur jene Füllstoffe, die keine Eigenfärbung aufweisen und feinteilig genug sind, um die Herstellung eines transparent-farblosen oder zumindest gedeckt-weißen Siliconelastomers nicht zu behindern. Hierzu zählen beispielsweise pyrogene Kieselsäuren, gefällte Kieselsäuren, Siliconharze, Quarzmehl, feinteilige Metalloxide und -hydroxide, wie Titandioxid, Aluminiumoxid, Aluminiumhydroxid und Zinkoxid, feinteilige Metallsalze, wie Bariumsulfat, Calciumcarbonat und Zirkoniumsilikat, und Diatomeenerde, sofern diese kovalent-gebundene SiH-Gruppen enthalten. Besonders bevorzugte Füllstoffe sind SiH-haltige pyrogene Kieselsäuren, gefällte Kieselsäuren, Quarzmehle und Siliconharze. Unter Siliconharzen werden verzweigte und netzwerkartige Polysiloxane verstanden, die vorzugsweise aus tri- und/oder tetrafunktionellen Einheiten der Formel $R^1 SiO_{3/2}$, $HSiO_{3/2}$ und $SiO_{4/4}$ zusammengesetzt sind; in geringerem Umfang können in den Siliconharzen auch mono- und/oder difunktionelle Einheiten der Formel $R^1_3 SiO_{1/2}$, $HR^1_2 SiO_{1/2}$, $R^1_2 SiO_{2/2}$ und $HR^1 SiO_{2/2}$ enthalten sein, wobei insgesamt jedoch mindestens eine der SiH-haltigen Einheiten vorhanden sein muß. Siliconharze können des weiteren bis zu 10 Mol.-% Si-gebundene OH- oder $R^1$O-Gruppen enthalten.

Hinsichtlich ihrer Auswirkungen auf das mechanische Eigenschaftsbild der sie enthaltenden Siliconelastomere lassen sich verstärkende und nichtverstärkende Füllstoffe unterscheiden. Verstärkende Füllstoffe weisen hohe spezifische Oberflächen (gemessen nach der BET-Methode gemäß DIN 66131 und DIN 66132) auf. Pyrogene und gefällte Kieselsäuren mit einer spezifischen Oberfläche zwischen 0,1 $m^2$/g, vorzugsweise 1 $m^2$/g bis 400 $m^2$/g sind besonders bevorzugt, da die große spezifische Oberfläche einen hohen Gehalt an oberflächlich kovalent-gebundenem SiH ermöglicht. Füllstoffe mit niedriger spezifischer Oberfläche sind entsprechend weniger geeignet.

Hinsichtlich des Herstellungsverfahrens werden solche Kieselsauren (KS) bevorzugt, die entweder durch naßchemische Fällung (gefällte KS) oder pyrogen durch Flammhydrolyse, z.B. von Chlorsilanen, (pyrogene KS) gewonnen werden.

Die bevorzugt verwendeten KS weisen einen hydrodynamischen Durchmesser der KS-Aggregate von kleiner als 10 $\mu$m, besonders bevorzugt kleiner als 1 $\mu$m, insbesondere im Größenbereich 100 bis 1000 nm, auf. Die spezifische Oberfläche der bevorzugt zum Einsatz kommenden KS ist größer als 1 $m^2$/g, besonders bevorzugt von 20 $m^2$/g bis 400 $m^2$/g (gemessen nach der BET Methode nach DIN 66131 und 66132). Es können hydrophile und hydrophobe KS eingesetzt werden.

Um an die Oberfläche der voranstehend beschriebenen Füllstoffe SiH-Gruppen kovalent anzubinden, werden vorzugsweise solche SiH-haltigen Organosiliciumverbindungen verwendet, die eine Silyliermittel-Funktion besitzen, d.h. chemisch mit den auf der Füllstoffoberfläche vorhandenen Gruppen, z.B. Silanolgruppen oder allgemein Metall-OH-Gruppen, reagieren können. Hierzu zählen Organosiliciumverbindungen der Struktur

$$R^2{}_aX_bSiH_c \qquad (II)$$

mit a = 1, 2 oder 3, bevorzugt 1
und b = 1, 2 oder 3, bevorzugt 2
und c = 1, 2 oder 3, bevorzugt 1
und a + b + c = 4 .

Der Rest $R^2$ ist ein Kohlenwasserstoffrest mit 1 bis 18 C-Atomen.

X ist eine hydrolysierbare Gruppe, bildet jedoch während der Reaktion keine basische Abgangsgruppe. Bevorzugt ist X ein Halogen wie Cl oder Br, bevorzugt Cl, oder X ist eine Alkoxygruppe mit 1 bis 8 C-Atomen, wie -OMe, -OEt, -OPr, -OBu; bevorzugt sind hier -OMe oder -OEt, wobei Me Methyl, Et Ethyl, Pr Propyl und Bu Butyl bedeutet.

oder oligomere oder polymere Organosiliciumverbindungen aufgebaut aus Einheiten der Struktur

$$R^2{}_aO_bSiH_c \qquad (III)$$

mit a = 1, 2 oder 3, bevorzugt 1
und b = 1, 2 oder 3, bevorzugt 2
und c = 1, 2 oder 3, bevorzugt 1
und a + b + c = 4

und mit einer Viskosität bis 10.000 mPas und bevorzugt solche, die zusätzlich eine oder mehrere Silanol- und/oder Alkoxygruppen enthalten.

$R^2$ besitzt die voranstehend gegebene Bedeutung.

Beispiele für $R^2$ sind vorzugsweise:
Alkylreste, wie der Methylrest, der Ethylrest, Propylreste, wie der iso- oder der n-Propylrest, Butylreste, wie der t- oder n-Butylrest, Pentylreste, wie der neo, die iso- oder der n-Pentylrest, Hexylreste, wie der n-Hexylrest, Heptylreste, wie der n-Heptylrest, Octylreste, wie der 2-Ethyl-hexyl- oder der n-Octylrest, Decylreste, wie der n-Decylrest, Dodecylreste wie der n-Dodecylrest, Hexadecylreste, wie der n-Hexadecylrest, Octadecylreste, wie der n-Octadecylrest, Alkenylreste wie der Vinyl-, der 2-Allyl- oder der 5-Hexenylrest,
Arylreste, wie der Phenyl- der Biphenyl oder Naphthenylrest, Alkylarylreste, wie Benzyl-, Ethylphenyl- Toluyl- oder die Xylylreste,
halogenierte Alkylreste, wie der 3-Chlorpropyl-, der 3,3,3-Trifluorpropyl oder der Perfluorhexylethylrest, halogenierte Arylreste, wie der Chlorphenyl oder Chlorbenzylrest.

Bevorzugtes Beispiel für $R^2$ ist aus Gründen der Verfügbarkeit der Methylrest.

Bevorzugte Beispiele für Silyliermittel sind vorzugsweise Trichlorsilan, Trimethoxysilan, Triethoxysilan, Methyldichlorsilan, Methyldimethoxysilan, Methyldiethoxysilan, Dimethylchlorsilan, Dimethylmethoxysilan, Dimethylethoxysilan. Besonders bevorzugt sind Methyldichlorsilan, Methyldimethoxysilan und Methyldiethoxysilan.

Andere geeignete Silyliermittel sind Oligo- oder Polysiloxane mit Si-H Gruppen, insbesondere Polymethylhydrogensiloxane, mit einer Viskosität bis 1000 mPas, die gegebenenfalls in geeigneten, neutralen oder nicht-basischen Lösemitteln verdünnt werden können, sowie Tetramethyldisilazan. Ferner können auch andere SiH-haltige Silyliermittel eingesetzt werden, wie N-dimethylsilyl-2-oxazolidinon, tert.-Butylaminodimethylsilan, N,N'-(dimethylsilyl)harnstoff und Bis-dimethylsilylacetamid.

Es können auch Mischungen aus Silyliermitteln eingesetzt werden.

Die Silylierung der Füllstoffe kann in Gegenwart von Zusatzstoffen erfolgen, wie

Wasser und

gegebenenfalls neutralen oder nicht-basischen Lösemitteln, wie aliphatische Alkohole, wie MeOH, EtOH, n-PrOH, iso-PrOH, n-, iso-BuOH, oder Alkohol/Wassergemische, Ether, wie Diethylether oder Tetrahydrofuran, Ketone, wie Methylisobutylketon MIBK, Kohlenwasserstoffe, wie n-Hexan, cyclo-Hexan, Toluol oder Mineralöle.

Die Herstellung eines SiH-haltigen Füllstoffs kann beispielsweise unter Anwendung nachfolgend beschriebener Mengenverhältnisse erfolgen: 100 Gew.-Teile Kieselsäure werden pro 100 m$^2$/g ihrer spezifischen Oberfläche umgesetzt mit 0,01 bis 100 Gew.-Tl. Silyliermittel bezogen auf je 100 g/Mol an Molekulargewicht des Silyliermittels, zugesetzt werden können 0,01 bis 100 Teile Wasser und Lösemittel. Bevorzugt werden 0,1 bis 5 Gew.% an Si-H zugesetzt.

Die Herstellung eines SiH-haltigen Füllstoffs kann beispielsweise unter Anwendung nachfolgend beschriebener Reaktionsbedingungen erfolgen: Die Kieselsäure und die Silyliermittel werden intensiv vermischt. Dies kann z.B. durch Fluidisieren der Kieselsäure, durch Rühren oder durch einen Inertgasfluß, und Aufdüsen der Silyliermittel und der Hilfsstoffe als feinstverteiltes Aersol erfolgen. Dies kann jedoch auch in einem geeigneten Lösemittel, neutral und nicht-basisch, erfolgen. Die Mischzeit liegt bei 1 Sekunde bis 8 Stunden, bevorzugt 5 Min bis 60 Min, die Reaktionszeit liegt bei 1 Minute bis 24 Stunden, bevorzugt 15 Min bis 2 h. Das Mischen erfolgt bei Raumtemperatur bis 150°C, die Reaktion bei Raumtemperatur bis 150°C, bevorzugt 50 bis 120°C, anschließend erfolgt ein Reinigungsschritt von Flüchtigen, bevorzugt durch Ausheizen bei 100 bis 400°C, bevorzugt in inerter Atmosphäre, d.h. bei abgesenktem Sauerstoffgehalt, < 10%.

Der Gehalt der erfindungsgemäßen Siliconkautschukmasse an SiH-haltigem Füllstoff hängt ab einerseits vom SiH-Gehalt des Füllstoffs und andererseits vom gewünschten Grad der Verminderung der Gelbfärbung. Nichterfindungsgemäße HTV-Siliconkautschukmassen, die folglich Bestandteil (B) nicht enthalten, und zu Elastomeren mit intensiver Gelbfärbung vernetzen, machen höhere Gehalte an Bestandteil (B) erforderlich (um die Gelbfärbung zu vermeiden), als solche Massen, die lediglich schwach-gelbliche Elastomere liefern. Die erfindungsgemäßen Siliconkautschukmassen enthalten, bezogen auf die Gesamtmasse, zwischen 1 Gew.-ppm und 2.000 Gew.-ppm Si-gebundenen Wasserstoff, vorzugsweise zwischen 10 Gew.-ppm und 500 Gew.-ppm, welcher ausschließlich durch den SiH-Gehalt des Füllstoffs (B) verursacht wird. Der Gehalt an Füllstoff (B), bezogen auf die Gesamtmasse, liegt zwischen 0,1 Gew.-% und 80 Gew.-%, vorzugsweise zwischen 1 Gew.-% und 30 Gew.-%.

Zu (C): SiH-freie Füllstoffe, wie sämtliche üblicherweise in HTV-Siliconkautschukmassen eingesetzte Füllstoffe, können vorzugsweise enthalten sein bis zu einem Gehalt von 80 Gew.-% bezogen auf die Gesamtmasse; vorzugsweise beträgt der Füllstoffgehalt (Bestandteil (B) und (C) insgesamt) zwischen 10 Gew.-% und 50 Gew.-%.

Als Füllstoffe können vorzugsweise enthalten sein beispielsweise gefällte Kieselsäuren und pyrogene Kieselsäuren, sowohl in hydrophiler als auch hydrophober Form, Quarzmehle, feinteilige nichtfarbige Metalloxide oder -salze, Kreide, Gips, Diatomeenerden, Siliconharze, Glasfasern und feinstteilige Kunststoffpulver.

Zu (D): Beispiele für geeignete organische Peroxide sind vorzugsweise Dicumylperoxid, Dibenzoylperoxid, Bis-(4-methylbenzoyl)-peroxid, Bis-(2,4-dichlorbenzoyl)-peroxid, 2,5-Bis-(tert.-butylperoxy)-2,5-dimethylhexan. Bevorzugte Peroxide sind 2,5-Bis-(tert.-butylperoxy)-2,5-dimethylhexan und Dicumylperoxid. Es können Mischungen verschiedener Peroxide verwendet werden.

Die erfindungsgemäßen Siliconkautschukmassen enthalten Peroxid (D) in Mengen von vorzugsweise 0,4 bis 2,0 Gew.-%, besonders bevorzugt 0,7 bis 1,5 Gew.-%, jeweils bezogen auf die Gesamtmasse.

Zu (E): Die erfindungsgemäße Siliconkautschukmasse kann vorzugsweise weitere Zusätze enthalten, die dem Stand der Technik gemäß üblich sind. Hierzu zählen beispielsweise Hitzestabilisatoren, Verarbeitungshilfsmittel, Weichwalzmittel, Trennmittel, Flammschutzmittel, Zusätze zur Verringerung des Druckverformungsrestes und Weichmacher. Derartige Zusätze können bezogen auf die Gesamtmasse bis zu einem Gehalt von 50 Gew.-%, vorzugsweise bis zu 10 Gew.-%, enthalten sein.

Die erfindungsgemäßen peroxidisch-vernetzbaren Siliconkautschukmassen, welche SiH-haltige Füllstoffe enthalten, weisen ausgezeichnete Verarbeitungseigenschaften auf, insbesondere tritt keine Walzenklebrigkeit in Erscheinung und keine Formenhaftung (im Unterschied zu Polymethylhydrogensiloxan haltigen Siliconkautschukmassen von ansonsten gleicher Zusammensetzung). Zudem tritt auch nach erfolgter Vernetzung wie auch thermischer Nachbehandlung keine Gelbfärbung auf. Die vernetzten Siliconelastomere haben eine trockene, nichtklebrige Oberfläche, während erhöhte Gehalte an H-Siloxan aufweisende Siliconelastomere eine gewisse Oberflächenklebrigkeit zeigen.

Die erfindungsgemäße Siliconkautschukzusammensetzung kann vorzugsweise zur Herstellung transparenter elastomerer Formteile, Beschichtungen, Fugenmassen etc. verwendet werden, für die auch üblicherweise HTV-Siliconkautschuke verwendet werden. Beispiele hierfür sind Dichtungen für Kaffeemaschinen, Mikrowellenherde, Thermoskannen, Sterilisationsschränke und Dampfkochtöpfe, Kabelbeschichtungen und Kabelendverschlüsse, Tastaturen und Federelemente für Taschenrechner, Telefone, Computerspiele, Fernschreiber, Schalterabdeckungen und Interkonnektoren, Profile für Trockenverglasungen, Dialyseschläuche, Foleykatheter, Narkosemasken, Taucherbrillen, Trinksauger, Beatmungsbeutel, Schläuche, Membranen und Förderbänder.

I.1 Herstellung einer Si-H haltigen HDK (hochdisperse Kieselsäure) mit Methylhydrogendichlorsilan

100 g einer pyrogenen Kieselsäure mit einer spezifischen BET-Oberfläche von 300 m$^2$/g (Wacker HDK® T30), 12 g Wasser, 6 g Methanol und 25 g Dichlormethylsilan werden während 30 Minuten bei Raumtemperatur intensiv vermischt. Anschließend wird bei 80 °C während 2 h die Reaktion vervollständigt. Unter leichtem N$_2$-Strom wird sodann bei 200 °C für 2 h von füchtigen Stoffen gereinigt. Es werden 102 g eines weißen Pulvers erhalten. Im IR (DRIFT) zeigt das Produkt eine intensive Bande bei 2160 1/cm, charakteristisch für die Si-H Schwingung. Der Gehalt dieser Kieselsäure an Si-gebundenem Wasserstoff beträgt 1.200 Gew.-ppm.

I.2 Herstellung einer Si-H haltigen HDK mit Dimethylhydrogenchlorsilan

100 g einer pyrogenen Kieselsäure mit einer spezifischen BET-Oberfläche von 300 m$^2$/g (Wacker HDK® T30), 10 g Wasser, 35,7 g Methanol und 52,6 g Dimethylhydrogenchlorsilan werden bei Raumtemperatur während 30 Minuten intensiv vermischt. Anschließend wird bei 80 °C während 2 h die Reaktion vervollständigt. Unter leichtem N$_2$-Strom wird sodann bei 200 °C für 2 h von flüchtigen Bestandteilen gereinigt. Es werden 102 g eines weißen Pulvers erhalten. Im IR (DRIFT) zeigt das Produkt eine intensive Bande bei 2160 1/cm, charakteristisch für die Si-H Schwingung. Der Gehalt dieser Kieselsäure an Si-gebundenem Wasserstoff beträgt 580 Gew.-ppm.

I.3 Herstellung einer Si-H haltigen HDK mit Diethoxymethylhydrogensilan 100 g einer pyrogenen Kieselsäure mit einer spezifischen BET-Oberfläche von 300 m$^2$/g (Wacker HDK® T30), 10 g Wasser und 20 g Diethoxymethylhydrogensilan werden während 30 Minuten bei Raumtemperatur intensiv vermischt. Anschließend wird bei 80 °C während 2 h die Reaktion vervollständigt. Unter leichtem N$_2$-Strom wird sodann bei 150 °C für 1 h und bei 200 °C für weitere 2 h von flüchtigen Bestandteilen gereinigt. Es werden 102 g eines weißen Pulvers erhalten. Im IR (DRIFT) zeigt das Produkt eine intensive Bande bei 2160 1/cm, charakteristisch für die Si-H Schwingung. Der Gehalt dieser Kieselsäure an Sigebundenem Wasserstoff beträgt 800 Gew.-ppm.

I.4 Herstellung einer Si-H freien, hydrophoben HDK mit Hexamethyldisilazan

Zu 100 g einer pyrogenen Kieselsäure mit einer spezifischen Oberfläche nach BET von 300 m$^2$/g (Wacker HDK® T30) wurden 15 g entsalztes Wasser sowie anschließend 45 g Hexamethyldisilazan bei 25°C zugemischt. Nach 30 Minuten Homogenisieren bei 25°C und 2 h Reaktionszeit bei Raumtemperatur wird die Kieselsäure 3 h unter Sickstoffstrom bei 150°C ausgeheizt. Man erhält eine hydrophobe Kieselsäure mit einem Kohlenstoffgehalt von 4.6 Gew.-%.

I.5 Herstellung einer Basismischung, bestehend aus Organopolysiloxan und pyrogener Kieselsäure, die in den erfindungsgemäßen und nichterfindungsgemäßen Beispielen Verwendung findet:

100 Gew.-Teile eines linearen Dimethylvinylsiloxy-endständigen Polydimethylsiloxans mit einer bei 25°C gemessenen Viskosität von 26.000 Pa.s und einem zahlenmittleren Molekulargewicht von ca. 470.000 g/mol, welches im statistischen Mittel an jedem 3.200sten kettenständigen Siliciumatom eine Vinylgruppe trägt, werden in einem Laborkneter der Fa. Werner und Pfleiderer (Stuttgart, Typ LUK 1.0) bei einer Temperatur von 70°C und einer Umdrehungszahl der Knetschaufeln von 28 Upm portionsweise mit insgesamt 47,1 Gew.-Teile einer hydrophoben Kieselsäure, deren Zusammensetzung in den Beispielen beschrieben ist, innerhalb von 1 Stunde homogen vermischt. Anschließend wird die Mischung weitere 2 Stunden bei einer Temperatur von 70°C und Normaldruck geknetet.

I.6 Herstellung der vernetzten Siliconelastomere

100 Gew.-Teile der entsprechend der nachfolgenden Beispiele hergestellten zu vernetzenden Siliconkautschukzusammensetzung werden auf einem Laborwalzwerk bei einer Friktion von 1 : 1,1 bei Raumtemperatur während 10 Minuten mit 0,7 Gew.-Teile Dicumylperoxid homogen vermischt. Diese peroxidhaltige Siliconkautschukmasse wird sofort im Anschluß in Preßformen aus Edelstahl gefüllt und in einer hydraulischen Presse während 10 Minuten bei einer Temperatur von 170°C vernetzt. Nach der Vernetzung werden die 6 mm dicken Siliconelastomerplatten entformt und 4 Stunden bei einer Temperatur von 200°C in einem Umlufttrockenschrank getempert.

I.7 Charakterisierung der unvernetzten Siliconkautschukmasse sowie der vernetzten Siliconelastomere

I.7.1 Charakterisierung der Verarbeitungseigenschaften der unvernetzten Siliconkautschukmassen

Die erfindungsgemäße unvernetzte Siliconkautschukmasse zeichnet sich gegenüber herkömmlichen, insbesondere H-Siloxan haltigen Massen, durch eine verminderte Klebrigkeit aus. Dies äußert sich zum einen darin, daß die Klebrigkeit des Siliconmassenfells auf der Walze (Walzenklebrigkeit) deutlich vermindert wird, zum anderen in einer verminderten Klebrigkeit der gewalzten Siliconmassenfelle untereinander (Selbstklebrigkeit). Im Unterschied zu H-Siloxan haltigen Massen weisen die erfindungsgemäßen Siliconmassen eine erhöhte Fellfestigkeit auf. Walzenklebrigkeit, Selbstklebrigkeit und Fellfestigkeit stellen für den Fachmann wohlbekannte und sehr wesentliche Verarbeitungskriterien dar. Insgesamt zeichnen sich die erfindungsgemäßen unvernetzten Massen infolge ihrer verminderten Klebrigkeit, höheren Geschmeidigkeit und Fellfestigkeit sowie ihres trockeneren Griffes somit durch wesentlich bessere Verarbeitungseigenschaften aus. Obgleich derartige Verarbeitungseigenschaften vorzugsweise einer subjektiven Bewertung unterliegen, wird versucht, diese mittels rheometrischer Meßergebnisse in objektiven Parametern zu quantifizieren.

Um vergleichbare rheometrische Meßdaten zu erhalten, erfolgte die Messung jeweils 7 Tage nach Herstellung der fertigen, jedoch noch peroxidfreien, Siliconkautschukmasse, welche vor der rheometrischen Messung bei Raumtemperatur 5 Minuten auf der Laborwalze zu einem ca. 2 mm dicken Fell ausgewalzt wurde, wobei sich die charakteristischen Verarbeitungseigenschaften einstellen. Unmittelbar anschließend wurde aus diesem Fell eine kreisförmige Scheibe (Durchmesser 25 mm) ausgeschnitten und zwischen den Platten (Durchmesser 25 mm) eines Rheometers (Typ RDA II; Fa. Rheometric Scientific GmbH) plaziert und die rheometrische Messung bei Raumtemperatur gestartet. Es wurden getrennt zwei unterschiedliche Meßtypen verwendet. Meßtyp A: Logarithmischer Frequenz-Sweep bei 25°C, System Platte-Platte, Plattenabstand 2 mm, Verformungsamplitude 10%, Anfangsfrequenz 0,01 Hz, Endfrequenz 10 Hz, 5 Meßpunkten pro Frequenzdekade. Meßtyp B: Logarithmischer Amplituden-Sweep bei 25°C, System Platte-Platte, Plattenabstand 2 mm, Meßfrequenz (f) 1 Hz, Anfangsverformung 0,05%, Endverformung 100%, 10 Meßpunkte pro Dekade.

Die rheometrischen Messungen ermöglichen es, die elastischen und viskosen Anteile am Deformationsverhalten der Siliconkautschukmassen getrennt zu bestimmen. Die sich im Speicherschermodul, $G'(f)$ [MPa], äußernde phasengerechte Response des Materials stellt hierbei ein Maß für den elastischen Anteil dar, während der Verlustschermodul, $G''(f)$ [MPa], die um 90° verschobene Materialantwort repräsentiert, womit ein Maß für den viskosen Anteil am Deformationsverhalten gegeben ist. Je größer die Phasenverschiebung $\delta$ zwischen Scherspannung und Verformung ist, desto ausgeprägter ist der viskose Charakter der Siliconkautschukmasse. Das Vorhandensein relativ kurzkettiger Polymerbestandteile in der Siliconkautschukmasse, wie Polymethylhydrogensiloxan, erhöht grundsätzlich den viskosen Charakter der Masse, was in einem zunehmenden Verhältnis $G''/G'$ zum Ausdruck kommt; insbesondere wird der elastische Anteil am Deformationsverhalten mit zunehmendem Gehalt an kürzerkettigen Organosiloxanen verringert. Mit zunehmendem viskosen und abnehmendem elastischen Verhalten ist eine Zunahme der Klebrigkeit und Abnahme der Fellfestigkeit (green strength) verbunden, was, da vergleichbar zusammengesetzte Massen betrachtet werden, anhand der Veränderungen im Speicher- und Verlustmodul quantifiziert und nachgewiesen werden kann.

I.7.2 Charakterisierung der Entformbarkeit

Die erfindungsgemäßen Massen zeichnen sich, verglichen mit Polymethylhydrogensiloxan haltigen Massen, durch eine deutlich verbesserte Entformbarkeit aus. Da die hier betrachtete verminderte Entformbarkeit auf eine erhöhte Haftung der vernetzten Masse auf der Formenoberfläche beruht, wurde diese anhand von Zug-Scher-Versuchen quantifiziert. Zu diesem Zweck wurde die peroxidhaltige Siliconkautschukmasse auf ein 1,2 mm dickes und 25 mm breites Stahlblech aufgetragen und mit einem zweiten Stahlblech der gleichen Abmessungen so abgedeckt, daß diese auf einer Fläche von 25 x 15 mm überlappen und durch eine 0,1 mm dicke Schicht der Siliconkautschukmasse (Schichtdicke wird durch 0,1 mm dicken Stahldraht eingestellt) verbunden sind. Dieser Haftverbund wurde 5 Minuten einer Temperatur von 170°C ausgesetzt, wobei die Klebefläche während der Vernetzungsdauer mit einer Druckkraft von 100 N belastet wurde. Die Bestimmung der Klebfestigkeit, $F_K$ [N/mm$^2$], dem Quotienten aus der Höchstkraft und der Klebefläche, erfolgte im Zugscherversuch gemäß DIN 53283, wobei eine Vorkraft von 0,5 N und eine Prüfgeschwindigkeit von 10 mm/min gewählt wurden.

I.7.3 Charakterisierung der Gelbfärbung

Die Charakterisierung der Gelbfärbung erfolgte an 6 mm dicken Siliconelastomerplatten gemäß DIN 6167, DIN 5033 und DIN 53263 anhand der Normalfarbwerte X, Y und Z, die unter Zugrundelegung der Normlichtart D 65 und des 2°-Normalbeobachters bestimmt wurden. Die Farbmessung erfolgte mit dem Gerät Minolta Chroma Meter CR 300. Aus den Normalfarbwerten X, Y und Z wurde der Gelbwert G entsprechend DIN 6167 mit folgender Formel berechnet:

$$G = (a X - b Z) 100 / Y, \text{ wobei } a = 1.298 \text{ und } b = 1.133.$$

Die auf diese Weise bestimmten Gelbwerte der Siliconelastomerplatten korrelieren gut mit dem subjektiven Eindruck von der Intensität der Gelbfärbung; je größer der G-Wert, desto ausgeprägter die Gelbfärbung.

**Beispiel 1\* (nichterfindungsgemäßes Vergleichsbeispiel):**

Die Herstellung der Basismischung gemäß des unter I.5 beschriebenen Verfahrens erfolgte unter ausschließlicher Verwendung der gemäß Verfahren I.4 hergestellten hydrophoben Kieselsäure. Die Verarbeitungseigenschaften dieser unvernetzten Siliconkautschukmasse wurden anhand der rheometrischen Messungen (vgl. Tab. 2a, 2b) sowie des Zugscherversuchs (vgl. Tab.1) charakterisiert. Die Gelbfärbung der daraus gemäß I.6 hergestellten Siliconelastomere wurde nach I.7.3 beurteilt (vgl. Tab.3)

**Beispiel 2 (erfindungsgemäß):**

Die Herstellung der Basismischung erfolgte gemäß des unter I.5 beschriebenen Verfahrens, wobei eine Mischung bestehend aus 25,0 Gew.-Teilen Kieselsäure I.4 und 22,1 Gew.-Teilen Kieselsäure I.2 eingesetzt wird. Die Verarbeitungseigenschaften dieser unvernetzten Siliconkautschukmasse wurden anhand der rheometrischen Messungen (vgl. Tab. 2a, 2b) sowie des Zugscherversuchs (vgl. Tab.1) charakterisiert. Die Gelbfärbung der daraus gemäß I.6 hergestellten Siliconelastomere wurde nach I.7.3 beurteilt (vgl. Tab.3).

**Beispiel 3 (erfindungsgemäß):**

Die Herstellung der Basismischung erfolgte gemäß des unter I.5 beschriebenen Verfahrens, wobei eine Mischung bestehend aus 2,9 Gew.-Teile Kieselsäure I.4 und 44,2 Gew.-Teile Kieselsäure I.2 eingesetzt wird. Die Verarbeitungseigenschaften dieser unvernetzten Siliconkautschukmasse wurden anhand der rheometrischen Messungen (vgl. Tab. 2a, 2b) sowie des Zugscherversuchs (vgl. Tab.1) charakterisiert. Die Gelbfärbung der daraus gemäß I.6 hergestellten Siliconelastomere wurde nach I.7.3 beurteilt (vgl. Tab.3).

**Beispiel 4 (erfindungsgemäß):**

Die Herstellung der Basismischung erfolgte gemäß des unter I.5 beschriebenen Verfahrens, wobei eine Mischung bestehend aus 36,4 Gew.-Teilen Kieselsäure I.4 und 10,7 Gew.-Teilen Kieselsäure I.1 eingesetzt wird. Die Verarbeitungseigenschaften dieser unvernetzten Siliconkautschukmasse wurden anhand der rheometrischen Messungen (vgl. Tab. 2a, 2b) sowie des Zugscherversuchs (vgl. Tab.1) charakterisiert. Die Gelbfärbung der daraus gemäß I.6 hergestellten Siliconelastomere wurde nach I.7.3 beurteilt (vgl. Tab.3).

**Beispiel 5 (erfindungsgemäß):**

Die Herstellung der Basismischung erfolgte gemäß des unter I.5 beschriebenen Verfahrens, wobei eine Mischung bestehend aus 25,8 Gew.-Teilen Kieselsäure I.4 und 21,3 Gew.-Teilen Kieselsaure I.1 eingesetzt wird. Die Verarbeitungseigenschaften dieser unvernetzten Siliconkautschukmasse wurden anhand der rheometrischen Messungen (vgl. Tab. 2a, 2b) sowie des Zugscherversuchs (vgl. Tab.1) charakterisiert. Die Gelbfärbung der daraus gemäß I.6 hergestellten Siliconelastomere wurde nach I.7.3 beurteilt (vgl. Tab.3).

**Beispiel 6 (erfindungsgemäß):**

Die Herstellung der Basismischung erfolgte gemäß des unter I.5 beschriebenen Verfahrens, wobei eine Mischung bestehend aus 31,4 Gew.-Teilen Kieselsäure I.4 und 15,7 Gew.-Teile Kieselsäure I.3 eingesetzt wird. Die Verarbeitungseigenschaften dieser unvernetzten Siliconkautschukmasse wurden anhand der rheometrischen Messungen (vgl. Tab. 2a, 2b) sowie des Zugscherversuchs (vgl. Tab.1) charakterisiert. Die Gelbfärbung der daraus gemäß I.6 hergestellten Siliconelastomere wurde nach I.7.3 beurteilt (vgl. Tab.3).

**Beispiel 7 (erfindungsgemäß):**

Die Herstellung der Basismischung erfolgte gemäß des unter I.5 beschriebenen Verfahrens, wobei eine Mischung bestehend aus 15,7 Gew.-Teilen Kieselsäure I.4 und 31,4 Gew.-Teilen Kieselsäure I.3 eingesetzt wird. Die Verarbeitungseigenschaften dieser unvernetzten Siliconkautschukmasse wurden anhand der rheometrischen Messungen (vgl. Tab. 2a, 2b) sowie des Zugscherversuchs (vgl. Tab. 1) charakterisiert. Die Gelbfärbung der daraus gemäß I.6 hergestellten Siliconelastomere wurde nach I.7.3 beurteilt (vgl. Tab.3).

**Beispiel 8\* (nichterfindungsgemäßes Vergleichsbeispiel):**

Die Herstellung der Basismischung erfolgte gemäß des unter I.5 beschriebenen Verfahrens, wobei 47,1 Gew.-Teile Kieselsäure I.4 eingesetzt werden. Anschließend werden in 100 Gew.-Teilen dieser Basismischung 0,53 Gew.-Teile trimethylsilylendständiges Polymethylhydrogensiloxan, welches einen zahlenmittleren Polymerisationsgrad von 35 aufweist, bei Raumtemperatur während 10 Minuten in einem Laborkneter homogen eingemischt. Die Verarbeitungseigenschaften dieser unvernetzten Siliconkautschukmasse wurden anhand der rheometrischen Messungen (vgl. Tab. 2a, 2b), die Entformbarkeit der vernetzten Masse anhand des Zugscherversuchs (vgl. Tab. 1) charakterisiert. Die Gelbfärbung der daraus gemäß I.6 hergestellten Siliconelastomere wurde nach I.7.3 beurteilt (vgl. Tab.3).

**Beispiel 9\* (nichterfindungsgemäßes Vergleichsbeispiel):**

Die Herstellung der Basismischung erfolgte gemäß des unter I.5 beschriebenen Verfahrens, wobei 47,1 Gew.-Teile Kieselsäure I.4 eingesetzt wurden. Anschließend wurden in 100 Gew.-Teilen dieser Basismischung 1,06 Gew.-Teile eines trimethylsilylendständigen Polymethylhydrogensiloxans, welches einen zahlenmittleren Polymerisationsgrad von 35 aufweist, bei Raumtemperatur während 10 Minuten in einem Laborkneter homogen eingemischt. Die Verarbeitungseigenschaften dieser unvernetzten Siliconkautschukmasse wurden anhand der rheometrischen Messungen (vgl. Tab. 2a, 2b) sowie des Zugscherversuchs (Klebfestigkeit, vgl. Tab. 1) charakterisiert. Die Gelbfärbung der daraus gemäß I.6 hergestellten Siliconelastomere wurde nach I.7.3 beurteilt (vgl. Tab.3)

**Beispiel 10 (erfindungsgemäß):**

Entspricht Beispiel 2, mit dem Unterschied, daß eine Kieselsäuremischung bestehend aus 42,4 Gew.-Teile Kieselsäure I.4 und 4,7 Gew.-Teile Kieselsäure I.2 eingesetzt wurden. Die Gelbfärbung der daraus gemäß I.6 hergestellten Siliconelastomere wurde nach I.7.3 beurteilt (vgl. Tab.4).

**Beispiel 11 (erfindungsgemäß):**

Entspricht Beispiel 2, mit dem Unterschied, daß eine Kieselsäuremischung bestehend aus 35,3 Gew.-Teile Kieselsäure I.4 und 11,8 Gew.-Teile Kieselsäure I.2 eingesetzt wurden. Die Gelbfärbung der daraus gemäß I.6 hergestellten Siliconelastomere wurde nach I.7.3 beurteilt (vgl. Tab.4).

**Beispiel 12 (erfindungsgemäß):**

Entspricht Beispiel 2, mit dem Unterschied, daß eine Kieselsäuremischung bestehend aus 23,55 Gew.-Teile Kieselsäure I.4 und 12,55 Gew.-Teile Kieselsäure I.2 eingesetzt wurden. Die Gelbfärbung der daraus gemäß I.6 hergestellten Siliconelastomere wurde nach I.7.3 beurteilt (vgl. Tab.4).

**Beispiel 13 (erfindungsgemäß):**

Entspricht Beispiel 2, mit dem Unterschied, daß eine Kieselsäuremischung bestehend aus 11,8 Gew.-Teilen Kieselsäure I.4 und 35,3 Gew.-Teilen Kieselsäure I.2 eingesetzt wurden. Die Gelbfärbung der daraus gemäß I.6 hergestellten Siliconelastomere wurde nach I.7.3 beurteilt (vgl. Tab.4).

**Beispiel 14 (erfindungsgemäß):**

Entspricht Beispiel 2, mit dem Unterschied, daß 47.1 Gew.-Teilen Kieselsäure I.2 eingesetzt wurden. Die Gelbfärbung der daraus gemäß I.6 hergestellten Siliconelastomere wurde nach I.7.3 beurteilt (vgl. Tab.4).

**Beispiel 15\* (nichterfindungsgemäßes Vergleichsbeispiel):**

Die Herstellung der Basismischung erfolgte gemäß des unter I.5 beschriebenen Verfahrens, wobei 48,0 Gew.-Teile Kieselsäure I.4 eingesetzt werden. Anschließend werden in 100 Gew.-Teilen dieser Basismischung 2 Gew.-Teile trimethylsilylendständiges Polymethylhydrogensiloxan, welches einen zahlenmittleren Polymerisationsgrad von 35 aufweist, bei Raumtemperatur während 10 Minuten in einem Laborkneter homogen eingemischt. Die Verarbeitungseigenschaften dieser unvernetzten Siliconkautschukmasse wurden anhand der rheometrischen Messungen (vgl. Tab. 2a, 2b) charakterisiert.

**Beispiel 16\* (nichterfindungsgemäßes Vergleichsbeispiel):**

Die Herstellung der Basismischung erfolgte gemäß des unter I.5 beschriebenen Verfahrens, wobei 49,5 Gew.-Teile Kieselsäure I.4 eingesetzt werden. Anschließend werden in 100 Gew.-Teile dieser Basismischung 5 Gew.-Teile trimethylsilylendständiges Polymethylhydrogensiloxan, welches einen zahlenmittleren Polymerisationsgrad von 35 aufweist, bei Raumtemperatur während 10 Minuten in einem Laborkneter homogen eingemischt. Die Verarbeitungseigenschaften dieser unvernetzten Siliconkautschukmasse wurden anhand der rheometrischen Messungen (vgl. Tab. 2a, 2b) charakterisiert.

**Beispiel 17\* (nichterfindungsgemäßes Vergleichsbeispiel):**

Die Herstellung der Basismischung erfolgte gemäß des unter I.5 beschriebenen Verfahrens, wobei 50,9 Gew.-Teile Kieselsäure I.4 eingesetzt werden. Anschließend werden in 100 Gew.-Teile dieser Basismischung 8 Gew.-Teile trimethylsilylendständiges Polymethylhydrogensiloxan, welches einen zahlenmittleren Polymerisationsgrad von 35 aufweist, bei Raumtemperatur während 10 Minuten in einem Laborkneter homogen eingemischt. Die Verarbeitungseigenschaften dieser unvernetzten Siliconkautschukmasse wurden anhand der rheometrischen Messungen (vgl. Tab. 2a, 2b) charakterisiert.

Tabelle 1

| Klebfestigkeit der unter Verwendung der erfindungsgemäßen und nichterfindungsgemäßen Beispiele 1 bis 6 hergestellten Haftverbunde (H-Gehalt bezogen auf Si-gebundenen Wasserstoff) | | | |
|---|---|---|---|
| Beispiel-Nr. | Additiv | H-Gehalt der Masse [Gew.-ppm] | Klebfestigkeit $F_K$ [N/mm$^2$] |
| 1* | ohne | 0,00 | 0,67 |
| 2 | I.2 | 87,00 | 0,78 |
| 3 | I.2 | 174,00 | 0,75 |
| 4 | I.1 | 87,00 | 0,69 |
| 5 | I.1 | 174,00 | 0,72 |
| 6 | I.3 | 85,00 | 0,92 |
| 7 | I.3 | 170,00 | 1,03 |
| 8* | H-Siloxan | 87,00 | 1,58 |
| 9* | H-Siloxan | 173,00 | 1,63 |

Wie aus Tabelle 1 ersichtlich ist, weisen die unter Verwendung von Polymethylhydrogensiloxan haltigen Massen hergestellten Haftverbunde - trotz vergleichbaren SiH-Gehalts der Massen - wesentlich höhere Klebfestigkeiten auf als bei der Verwendung von SiH-haltiger Kieselsäuren. Erhöhte Werte der Klebfestigkeit indizieren eine Verschlechterung in der Entformbarkeit der vernetzten Siliconelastomere. Die erfindungsgemäßen Siliconkautschukmassen weisen diesen Nachteil nicht oder in erheblich geringerem Maße auf.

Tabelle 2a

| Rheometrische Kenngrößen entsprechend Meßtyp A erfindungsgemäßer und nichterfindungsgemäßer Siliconkautschukmassen | | | | | |
|---|---|---|---|---|---|
| Beispiel | Meßtyp | G′(1Hz) [kPa] | G″(1Hz) [kPa] | G″(1Hz) / G′(1Hz) | $\delta$(1Hz) [Grad] |
| 1* | A | 64,80 | 57,40 | 0,89 | 41,50 |
| 2 | A | 76,40 | 64,00 | 0,84 | 39,90 |

Tabelle 2a (fortgesetzt)

| Rheometrische Kenngrößen entsprechend Meßtyp A erfindungsgemäßer und nichterfindungsgemäßer Siliconkautschukmassen | | | | | |
|---|---|---|---|---|---|
| Beispiel | Meßtyp | G′(1Hz) [kPa] | G″(1Hz) [kPa] | G″(1Hz) / G′(1Hz) | δ(1Hz) [Grad] |
| 3 | A | 104,20 | 82,30 | 0,79 | 38,30 |
| 4 | A | 51,60 | 43,80 | 0,85 | 40,30 |
| 5 | A | 87,40 | 71,70 | 0,82 | 39,30 |
| 6 | A | 83,90 | 68,20 | 0,81 | 39,10 |
| 7 | A | 112,70 | 87,70 | 0,78 | 37,90 |
| 8* | A | 68,50 | 61,20 | 0,89 | 41,80 |
| 9* | A | 65,40 | 59,20 | 0,91 | 42,20 |
| 15* | A | 56,70 | 55,30 | 0,98 | 44,30 |
| 16* | A | 47,80 | 48,80 | 1,02 | 45,60 |
| 17* | A | 39,60 | 45,70 | 1,15 | 49,10 |

Die in Tabelle 2a angegebenen Daten verdeutlichen die rheologischen Unterschiede, die als Folge des Einmischens von zum einen H-Siloxan, zum anderen SiH-haltiger Kieselsäure in eine Siliconkautschukmasse - bei unverändertem Gewichtsverhältnis von polymerartigen zu füllstoffartigen Bestandteilen - in Erscheinung treten. Die Verwendung von H-Siloxan (vgl. nichterfindungsgemäße Beispiele 8*, 9*, 15*, 16*, 17*) bedingt - insbesondere bei höherem Gehalt - eine erhebliche Abnahme des Speichermoduls, welcher ein Maß für den elastischen Charakter bei einer Deformation der Masse darstellt. Zugleich erfährt der Verlustmodul G″ eine relative Erhöhung, was sich in zunehmenden Werten des Verhältnisses G″/G′ ausdrückt. Dies ist Folge einer zunehmenden, zwischen Scherspannung und Verformung auftretenden Phasenverschiebung δ, d.h., der viskose Charakter der Masse nimmt zu. Damit verbunden sind eine Erhöhung der Walzenklebrigkeit und Selbstklebrigkeit sowie eine Abnahme der Fellfestigkeit. Diese nachteiligen Effekte treten nicht in Erscheinung, wenn ein Teil des Füllstoffes durch einen entsprechenden Teil SiH-haltiger Kieselsäure ersetzt wird. Da eine SiH-haltige Kieselsäure keinen polymerartigen Bestandteil darstellt, wird der viskose Charakter der Masse nicht erhöht; je nach Hydrophobiergrad der SiH-haltigen Kieselsäure kann der viskose Charakter der Masse sogar noch verringert werden, d.h., die Klebrigkeit der Masse vermindert und die Fellfestigkeit erhöht werden. Dies belegen die sich auf gleichem oder sogar höherem Niveau befindlichen Werte des Speichermoduls (verglichen mit der Standardmasse (Beispiel 1*) sowie die niedrigeren Werte der Phasenverschiebung δ der erfindungsgemäßen Siliconkautschukmassen (Beispiel 2 bis 7).

Tabelle 2b

| Rheometrische Kenngrößen entsprechend Meßtyp B erfindungsgemäßer und nichterfindungsgemäßer Siliconkautschukmassen | | | | |
|---|---|---|---|---|
| Beispiel | Meßtyp | G′(0.05%) [kPa] | G′(100%) [kPa] | δ(100%) [Grad] |
| 1* | B | 332,00 | 34,00 | 46,40 |
| 2 | B | 343,00 | 40,00 | 43,60 |
| 3 | B | 566,00 | 38,00 | 43,20 |
| 4 | B | 355,00 | 36,00 | 44,10 |
| 5 | B | 379,00 | 39,00 | 45,70 |
| 6 | B | 391,00 | 38,00 | 45,90 |
| 7 | B | 542,00 | 41,00 | 45,10 |
| 8* | B | 310,00 | 34,00 | 45,60 |
| 9* | B | 296,00 | 30,00 | 46,30 |

Tabelle 2b (fortgesetzt)

| Rheometrische Kenngrößen entsprechend Meßtyp B erfindungsgemäßer und nichterfindungsgemäßer Siliconkautschukmassen | | | | |
|---|---|---|---|---|
| Beispiel | Meßtyp | G'(0.05%) [kPa] | G'(100%) [kPa] | $\delta$(100%) [Grad] |
| 15* | B | 278,00 | 28,00 | 47,70 |
| 16* | B | 249,00 | 25,00 | 48,20 |
| 17* | B | 136,00 | 14,00 | 50,70 |

Die Daten in Tabelle 2b verdeutlichen die bei zunehmender Scherung der Siliconkautschukmasse auftretenden Veränderungen im Speichermodul G' sowie in der Phasenverschiebung $\delta$. Vor der Vernetzung einer HTV-Siliconkautschukmasse wird diese üblicherweise auf einer Walze mit dem Vernetzer, einem Peroxid, sowie gegebenenfalls weiteren Zusätzen (Farbstoffe etc.) vermischt. Die dabei auftretende Scherbelastung der Masse führt zu charakteristischen rheologischen Veränderungen; im allgemeinen führt das Walzen zu einer Erweichung der Masse. Für die weitere Verarbeitung ist es jedoch meist notwendig, daß trotz Erweichung die Fellfestigkeit der Masse erhalten bleibt und keine Walzenklebrigkeit auftritt, d.h., die Elastizität des Siliconkautschukfells soll erhalten bleiben. Die Daten in Tabelle 2b belegen, daß das rheologische Verhalten bei Verwendung SiH-haltiger Kieselsäuren durch Scherbelastung weniger nachteilig verändert wird als bei Verwendung von H-Siloxan. Dies zeigt sich u.a. in höheren Werten des Speichermoduls G' auch nach intensiver Scherbelastung sowie in einer vergleichsweise geringeren Phasenverschiebung $\delta$ nach Scherung der erfindungsgemäßen Massen, wobei das wesentlich höhere G'-Ausgangsniveau berücksichtigt werden muß.

Tabelle 3

| Beurteilung der Gelbfärbung der gemäß der Beispiele 1 bis 9 hergestellten erfindungsgemäßen und nichterfindungsgemäßen Siliconelastomere anhand der Normalfarbwerte X, Y und Z sowie der Gelbwerte G (H-Gehalt bezogen auf Si-gebundenen Wasserstoff) | | | | | | |
|---|---|---|---|---|---|---|
| Beispiel | SiH-haltiges Additiv | H-Gehalt der Masse [Gew.-ppm] | X | Y | Z | G |
| 1* | ohne | 0,00 | 30,17 | 31,34 | 18,77 | 57,10 |
| 2 | I.2 | 87,00 | 31,98 | 33,30 | 25,13 | 39,15 |
| 3 | I.2 | 174,00 | 31,83 | 33,06 | 26,09 | 35,56 |
| 4 | I.1 | 87,00 | 28,63 | 29,66 | 21,13 | 44,58 |
| 5 | I.1 | 174,00 | 27,18 | 28,10 | 20,80 | 41,68 |
| 6 | I.3 | 85,00 | 28,12 | 29,49 | 20,95 | 43,28 |
| 7 | I.3 | 170,00 | 27,52 | 29,28 | 22,36 | 35,48 |
| 8* | H-Siloxan | 87,00 | 27,74 | 28,60 | 20,13 | 46,05 |
| 9* | H-Siloxan | 173,00 | 28,81 | 29,67 | 23,39 | 36,72 |

Die in Tabelle 3 angegebenen Werte verdeutlichen, daß der Grad der Verminderung der Gelbfärbung vornehmlich durch den SiH-Gehalt des Siliconelastomers bestimmt wird. Daher weisen die H-Siloxan bzw. SiH-haltigen Kieselsäuren enthaltenen Elastomere bei vergleichbarem SiH-Gehalt eine ähnliche Gelbfärbung auf, wobei festzustellen ist, daß die Gelbfärbung mit zunehmenden SiH-Gehalt abnimmt.

Tabelle 4

| Beurteilung der Gelbfärbung der gemäß der Beispiele 1, 10 bis 14 hergestellten erfindungsgemäßen und nichterfindungsgemäßen Siliconelastomere anhand der Normalfarbwerte X, Y und Z sowie der Gelbwerte G (H-Gehalt bezogen auf Si-gebundenen Wasserstoff) | | | | | |
|---|---|---|---|---|---|
| Beispiel | H-Gehalt der Masse [Gew.-ppm] | X | Y | Z | G |
| 1* | 0,00 | 29,84 | 30,75 | 19,02 | 55,88 |
| 10 | 14,00 | 32,51 | 33,66 | 22,36 | 50,10 |
| 11 | 34,00 | 31,63 | 32,64 | 23,14 | 45,46 |
| 12 | 68,00 | 31,91 | 32,97 | 24,59 | 41,12 |
| 13 | 102,00 | 31,84 | 32,83 | 24,94 | 39,82 |
| 14 | 137,00 | 32,40 | 33,40 | 26,42 | 36,06 |

Wie aus den in Tabelle 4 angegebenen Daten ersichtlich ist, wird die Gelbfärbung mit zunehmenden Gehalt an Si-gebundenem und auf der Oberfläche der Kieselsäure fixiertem Wasserstoff erheblich vermindert.

**Patentansprüche**

1.  Peroxidisch-vernetzbare Siliconkautschukmassen, die einen Füllstoff enthalten, der kovalent-gebundene Si-H-haltige Gruppen aufweist.

2.  Peroxidisch-vernetzbare Siliconkautschukmassen nach Anspruch 1, dadurch gekennzeichnet, daß sie auf (A) Organosiloxane aus Einheiten der allgemeinen Formel

$$R^1_a SiO_{(4-a)/2},\qquad\qquad (I)$$

basieren, worin der Rest $R^1$ gleich oder verschieden sein kann und einen substituierten oder nichtsubstituierten Kohlenwasserstoffrest mit 1 bis 20 Kohlenstoffatomen bedeutet oder gleich H oder OH ist und a 0, 1, 2 oder 3 ist.

3.  Peroxidisch-vernetzbare Siliconkautschukmassen nach Anspruch 1, dadurch gekennzeichnet, daß es sich bei dem Füllstoff, der kovalent-gebundene Si-H-haltige Gruppen aufweist, um Siliciumdioxid handelt.

4.  Verfahren zur Herstellung der Massen nach Ansprüchen 1 bis 3, dadurch gekennzeichnet daß ein Organopolysiloxan mit dem Si-H-haltigen Füllstoff vermischt wird.

5.  Verfahren zur Herstellung der Massen nach Anspruch 4, dadurch gekennzeichnet, daß als Organopolysiloxan (A) Organosiloxane aus Einheiten der allgemeinen Formel

$$R^1_a SiO_{(4-a)/2},\qquad\qquad (I)$$

verwendet wird, worin der Rest $R^1$ gleich oder verschieden sein kann und einen substituierten oder nichtsubstituierten Kohlenwasserstoffrest mit 1 bis 20 Kohlenstoffatomen bedeutet oder gleich H oder OH ist und a 0, 1, 2 oder 3 ist.

6.  Verfahren zur Herstellung der Massen nach Anspruch 4 oder 5, dadurch gekennzeichnet, daß als Si-H-haltiger Füllstoff Siliciumdioxid verwendet wird.

7.  Formkörper, Beschichtung oder Dichtmasse, dadurch gekennzeichnet, daß sie Massen nach den Ansprüchen 1 bis 4 oder hergestellt nach den Ansprüchen 4 bis 6, enthalten.

**Europäisches Patentamt**

# EUROPÄISCHER RECHERCHENBERICHT

Nummer der Anmeldung

EP 98 12 4208

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | DE 32 43 194 A (DEGUSSA) 5. April 1979<br>* Ansprüche *<br>* Seite 2, Formel *<br>* Seite 3, Zeile 13 - Zeile 18 *<br>* Beispiele 3-6 *<br>----- | 1-7 | C08K9/00<br>C08L83/04<br><br><br>RECHERCHIERTE SACHGEBIETE (Int.Cl.6)<br><br>C08K |

Der vorliegende Recherchenbericht wurde für alle Patentansprüche erstellt

| Recherchenort | Abschlußdatum der Recherche | Prüfer |
|---|---|---|
| BERLIN | 11. Juni 1999 | Hoepfner, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                                                           
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 98 12 4208

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-1999

| Im Recherchenbericht angeführtes Patentdokument | Datum der Veröffentlichung | Mitglied(er) der Patentfamilie | Datum der Veröffentlichung |
|---|---|---|---|
| DE 3243194 A | 24-05-1984 | EP 0109508 A | 30-05-1984 |
| | | JP 59105052 A | 18-06-1984 |

EPO FORM P0461

Für nähere Einzelheiten zu diesem Anhang : siehe Amtsblatt des Europäischen Patentamts, Nr.12/82